# EUROPEAN PATENT APPLICATION

(11) **EP 1 083 505 A2**
(43) Date of publication of application: **14.03.2001**
(21) Application number: 00307204.8
(22) Date of filing: 22.08.2000
(51) Int. Cl.: G06F 17/60

(54) **Film drop-off apparatus and method**

(30) Priority: 10.09.1999 US 394540
(71) Applicant: NCR INTERNATIONAL INC., Dayton, Ohio 45479 (US)
(72) Inventor: Walter, Joanne Synowsky, Alpharetta, Georgia 30022 (US)
(74) Representative: Williamson, Brian

(57) **Abstract**

A film drop-off apparatus which displays a special promotion in response to customer scanning of a bar code label on a film cartridge. The film drop-off apparatus includes a bar code reader, a display, an input device, and a computer which causes the display to display instructions to a customer including instructions for recording bar code information from a film cartridge using the bar code reader, which receives the bar code information from the bar code reader, which causes the display to display a special promotion associated with the bar code information, and which records a customer choice to accept or deny the special promotion from the input device.

## Description

The present invention relates to photo processing and more specifically to a film drop-off apparatus and method.

Film drop-off kiosks are commonplace in grocery stores and other retail establishments. A customer removes a film drop envelope from an envelope bin, fills out the envelope with name and address information, puts film to be developed into the envelope, and drops the envelope into a storage bin for pickup by photo processing personnel. More sophisticated film drop-off kiosks include computer interfaces and provide additional features for customers.

Film drop-off kiosks have only limited processing and promotional capability. Therefore, it would be desirable to provide a film drop-off kiosk and method.

It is accordingly an object of the present invention to provide a film drop-off apparatus and method.

In accordance with the teachings of the present invention, a film drop-off apparatus and method are provided.

According to a first aspect of the present invention there is provided a film processing method comprising:
recording bar code information from a film cartridge of a customer during a film processing transaction; and
displaying a promotion to the customer based upon the bar code information.

According to the second aspect of the present invention there is provided a film processing method comprising:
recording bar code information from a film cartridge of a customer during a film processing transaction;
   determining whether a promotion based upon the bar code information exists; and
   displaying the promotion to the customer if it exists.

According to the third aspect of the present invention there is provided a film processing method comprising:
displaying instructions to a customer during a film processing transaction, including instructions for recording bar code information from a film cartridge to be developed;
recording bar code information from the film cartridge in response to the instructions;
displaying a promotion to the customer based upon the bar code information; and
recording a customer choice to accept or deny the special promotion.

According to the fourth aspect of the present invention there is provided a film processing method comprising:
displaying first instructions to a customer during a film processing transaction;
recording customer information and film processing choices in response to the first instructions;
determining a first transaction total based upon the film processing choices;
displaying second instructions to a customer to record bar code information from a film cartridge of the customer to be developed;
recording the bar code information from the film cartridge in response to the second instructions;
displaying a promotion to the customer based upon the bar code information;
recording a customer choice to accept or deny the special promotion; and
determining a second transaction total based upon the first transaction total and a cost of the special promotion if the customer accepts the special promotion.

According to the fifth aspect of the present invention there is provided a film processing method comprising:
recording bar code information from a film cartridge of a customer during a film processing transaction;
reading a price file to determine whether a special promotion is associated with the bar code information;
if the special promotion is associated with the bar code information
   reading instructions for the special promotion;
   displaying the instructions; and
   recording a customer choice to accept or deny the special promotion.

According to the sixth aspect of the present invention there is provided a film drop-off apparatus comprising:
a bar code reader;
a display;
an input device; and
a computer which causes the display to display instructions to a customer including instructions for recording bar code information from a film cartridge using the bar code reader, which receives the bar code information from the bar code reader, which causes the display to display a special promotion associated with the bar code information, and which records a customer choice to accept or deny the special promotion from the input device.

The film drop-off apparatus includes a bar code reader, a display, an input device, and a computer which causes the display to display instructions to a customer including instructions for recording bar code information from a film cartridge using the bar code reader, which receives the bar code information from the bar code reader, which causes the display to display a special promotion associated with the bar code information, and which records a customer choice to accept or deny the special promotion from the input device.

The method includes recording bar code information from a film cartridge of a customer during a film processing transaction, and displaying a promotion to the customer based upon the bar code information.

An embodiment of the present invention will now be described, by way of example, with reference to the accompanying drawings, in which:
Fig. 1 is a block diagram of the film processing system, including a film drop-off kiosk of the present invention;
Fig. 2 is a perspective view of a film drop-off kiosk; and
Figs. 3A and 3B form a flow diagram illustrating the method of the present invention.

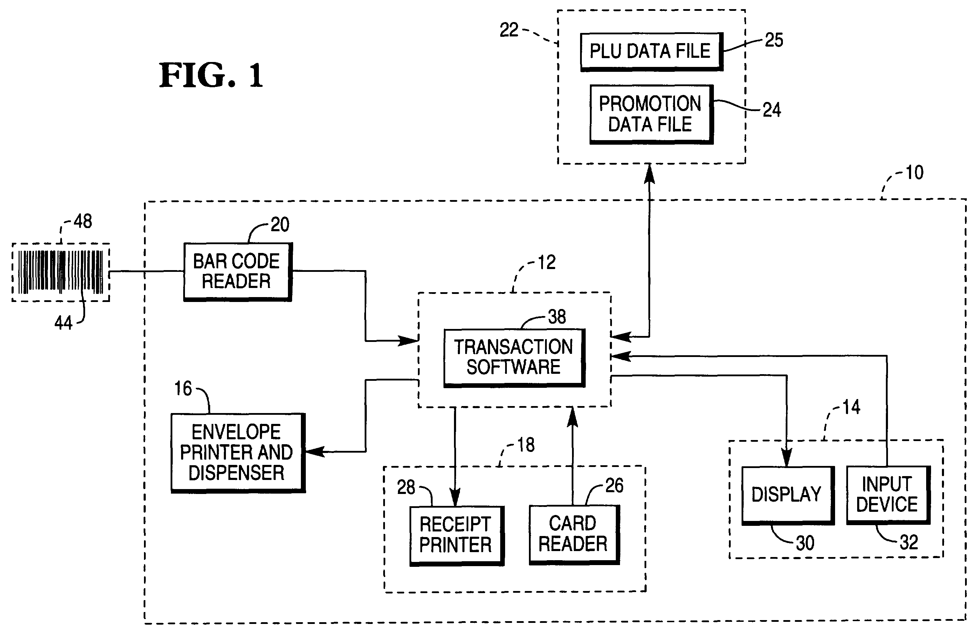

Referring to Fig. 1 of the drawings, there is shown therein a film drop-off apparatus 10 in a supermarket. Apparatus 10 primarily includes processor 12, interface modules 14, envelope printer and dispenser 16, payment modules 18, and bar code reader 20.

Processor 12 automates the functions of apparatus 10. For this purpose, processor 12 executes transaction software 38 which guides customers through film processing transactions, records customer choices, and accepts customer payment. Software 38 manages different pricing and delivery options available to a customer. Software 38 also manages display and processing of promotional information.

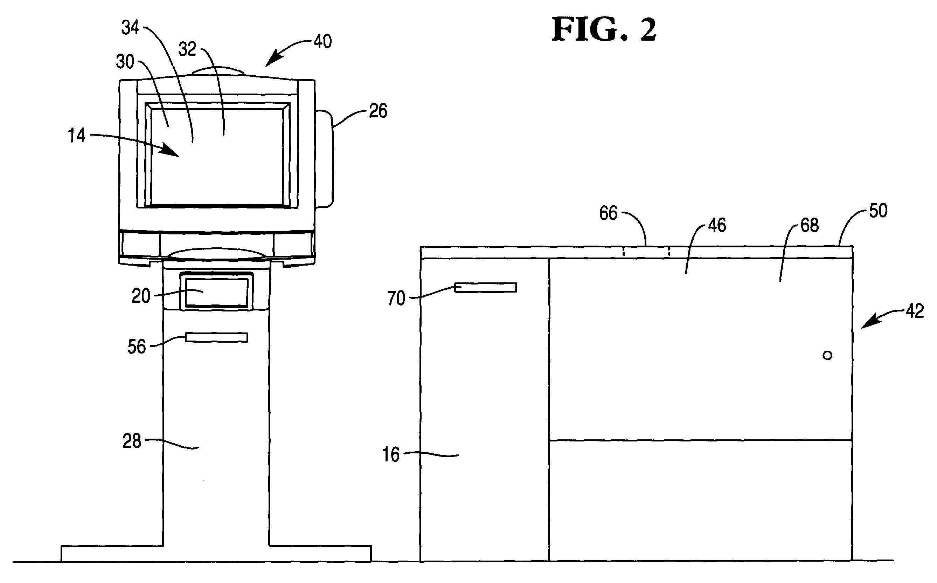

Interface modules 14 include display 30 and input device 32. Display 30 and input device 32 may be combined as touch screen 34 (Fig. 2).

Display 30 displays information to customers to assist them in completing a film processing transaction. Display 30 may by a cathode ray tube (CRT) or liquid crystal display (LCD).

Input device 32 records customer choices and other information in order to complete the transaction. Input device 32 may be a keyboard or touch screen.

Envelope printer and dispenser 16 prints customer information on an envelope and dispenses the envelope for film deposit.

Payment modules 18 allow customers to pay for film developing when they drop the film off. Payment modules 18 primarily include card reader 26 and receipt printer 28. Payment, including cash payment, may also be made at a customer service desk.

Bar code reader 20 allows customers to scan bar code labels on film cartridges, receipts, and film envelopes.

Under the present invention, software 38 causes display 30 to display promotional information to a customer upon scanning film cartridge 48. After a customer has scanned bar code label 44 on film cartridge 48 during a film processing transaction, software 38 determines the brand of film and optionally the type of film from information in the bar code label and corresponding information in price look-up (PLU) data file 25. Software 38 may then obtain a special promotion from promotion data file 24 based upon the bar code label information.

PLU data file 25 and promotion data file 24 may be one file or a number of files and may be located within storage media within transaction server 22 and/or within apparatus 10.

For example, after bar code label 44 is read, software 38 may generate a promotion to buy a competitive brand of film at a special price.

As another example, after bar code label 44 is read, software 38 may generate a promotion to buy multiple film cartridges of the same brand at a special price.

As yet another example, after bar code label 44 is read, software 38 may generate a promotion to buy film accessories, such as lens cleaning equipment, at a special price.

The customer may respond "yes" or "no" to the special promotion. If the customer answers "yes", the price of the promoted item is added to the transaction and a transaction receipt is printed containing the promoted item. The customer may pick up the promoted item at a customer service counter or elsewhere in the store as necessary.

Card reader 26 reads payment cards used by customers to make payment. Card reader 26 may include a magnetic stripe reader. Card reader 26 may also include a smart card reader or combination credit and smart card reader.

Receipt printer 28 prints customer receipts after payment has been made.

With reference to Fig. 2, an example film drop-off kiosk 10 is shown in more detail.

Film drop-off apparatus 10 primarily includes self-service terminal 40 and cabinet 42.

Self-service terminal 40 contains processor 12, card reader 26, receipt printer 28, touch screen 34. Self-service terminal 40 may include an NCR 7401 self-service terminal.

Card reader 26 accepts cards through slot 54.

Receipt printer 28 ejects a receipt through slot 56.

Cabinet 42 and includes envelope printer and dispenser 16, envelope storage bin 44, envelope collection bin 46, and work surface 50.

Envelope printer and dispenser 16 ejects an envelope with printed information thereon through slot 70.

Envelope collection bin 46 receives envelopes containing undeveloped film through slot 66. Store personnel regularly empty envelope collection bin 46 through door 68.

Work surface 50 forms the top of cabinet 42.

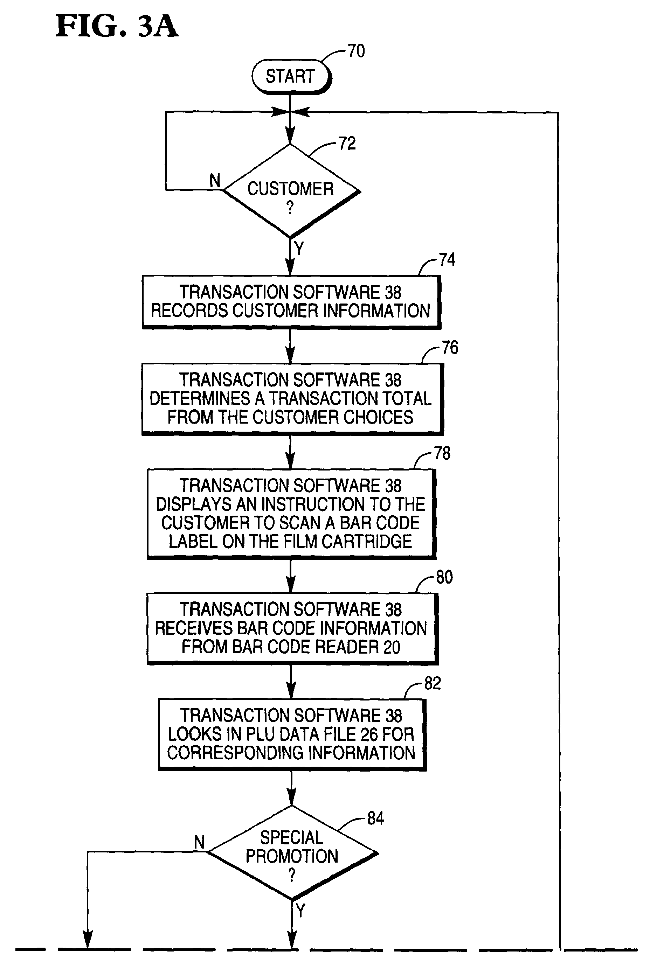

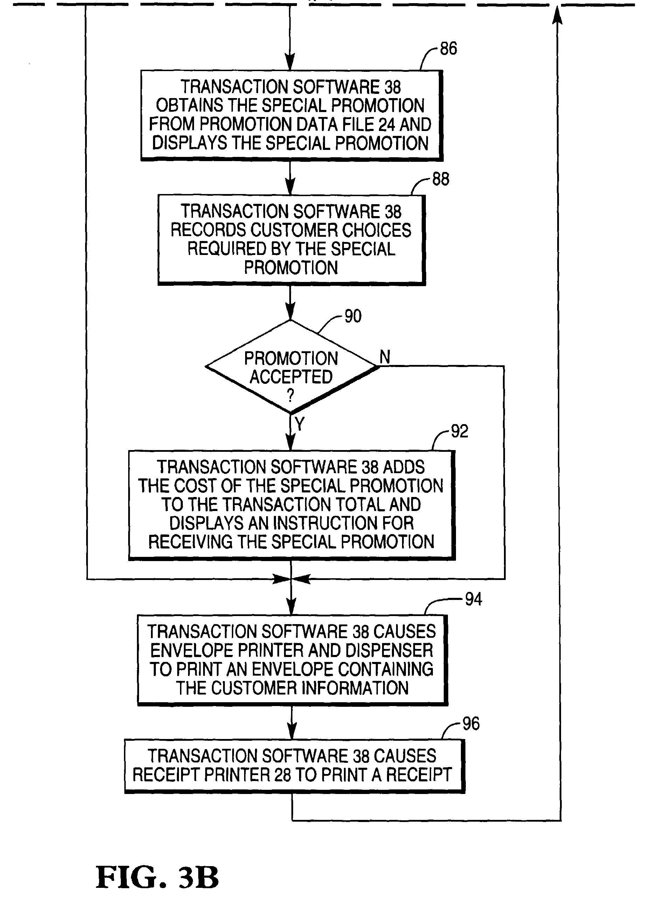

Turning now to Figs. 3A and 3B, the method of the present invention is illustrated in more detail beginning with start 70.

In step 72, transaction software 38 waits for a customer to approach self-service terminal 40 and engage touch screen 34. During this time period, self-service terminal 40 may be displaying promotional information or an opening screen. If a customer approaches self-service terminal 40, operation continues to step 74.

In steps 74-96, transaction software 38 guides the customer through a transaction by displaying instructions and recording information.

In step 74, transaction software 38 records customer information, such as name and address information, film pickup information, film delivery choices, and any other information relevant to the transaction, through touch screen 34.

In step 76, transaction software 38 determines a transaction total from the customer choices.

In step 78, transaction software 38 displays an instruction to the customer to scan bar code label 44 on film cartridge 48.

In step 80, transaction software 38 receives bar code information from bar code reader 20.

In step 82, transaction software 38 looks in PLU data file 25 for corresponding information.

In step 84, transaction software 38 determines from PLU data file 25 whether a special promotion exists for the bar code information. If so, operation continues to step 86. If not, operation proceeds to step 94.

In step 86, transaction software 38 obtains the special promotion from promotion data file 24 and displays the special promotion.

In step 88, transaction software 38 records customer choices required by the special promotion.

In step 90, transaction software 38 determines whether the customer has accepted the special promotion. If so, operation proceeds to step 92. If not, operation proceeds to step 94.

In step 92, transaction software 38 adds the cost of the special promotion to the transaction total and displays an instruction for receiving the special promotion.

In step 94, transaction software 38 causes envelope printer and dispenser to print an envelope containing the customer information.

In step 96, transaction software 38 causes receipt printer 28 to print a receipt. Operation returns to step 72 to wait for the another customer.

Advantageously, the method of the present invention allows retailers to promote products during a film processing transaction.

Although the present invention has been described with particular reference to certain preferred embodiments thereof, variations and modifications of the present invention can be effected within the scope of the present invention.

## Claims

1. A film processing method comprising:
recording bar code information from a film cartridge of a customer during a film processing transaction; and
displaying a promotion to the customer based upon the bar code information.

2. A film drop-off apparatus comprising:
a bar code reader;
a display;
an input device; and
a computer which causes the display to display instructions to a customer including instructions for recording bar code information from a film cartridge using the bar code reader, which receives the bar code information from the bar code reader, which causes the display to display a special promotion associated with the bar code information, and which records a customer choice to accept or deny the special promotion from the input device.
